(19) 

Europäisches Patentamt

European Patent Office

Office européen des brevets

(11) **EP 4 354 931 A1**

(12) **EUROPEAN PATENT APPLICATION**

published in accordance with Art. 153(4) EPC

(43) Date of publication:
**17.04.2024 Bulletin 2024/16**

(21) Application number: **22811291.8**

(22) Date of filing: **23.05.2022**

(51) International Patent Classification (IPC):
**H04W 16/18** (2009.01)     **H04W 16/28** (2009.01)

(52) Cooperative Patent Classification (CPC):
**H04W 16/18; H04W 16/28**

(86) International application number:
**PCT/JP2022/021134**

(87) International publication number:
**WO 2022/250021 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2021 JP 2021089837**

(71) Applicant: **Softbank Corp.**
**Tokyo 105-7529 (JP)**

(72) Inventors:
• **LIN HoYu**
**Tokyo 105-7529 (JP)**
• **SATO Akihiro**
**Tokyo 105-7529 (JP)**
• **OMOTE Hideki**
**Tokyo 105-7529 (JP)**

(74) Representative: **SSM Sandmair Patentanwälte Rechtsanwalt Partnerschaft mbB Joseph-Wild-Straße 20 81829 München (DE)**

(54) **INFORMATION PROCESSING DEVICE AND METHOD FOR DETERMINING INSTALLATION POSITION FOR RADIO WAVE REFLECTING MEMBER, AND PROGRAM**

(57)     Provided is an information processing apparatus and direction capable of determining an installation position of a radio-wave reflecting member without conducting an expensive field survey, so that radio waves with a predetermined power reach a target reception point located in an area out of line-of-sight, from a transmission point of radio-wave with a high frequency band. The information processing apparatus sets plural radio-wave propagation paths each with one reflection between a radio-wave transmission point in a target area and a target reception point located in an area out of line-of-sight against the radio-wave transmission point, based on map information of the target area, estimates reception characteristics at the target reception point for each of the plural radio-wave propagation paths, and calculates a total value of the reception characteristics by selecting the radio-wave propagation paths in descending order of reception characteristics at the target reception point, and determining an installation position of a radio-wave reflecting member based on a selection result of one or more radio-wave propagation paths selected by a time when the total value becomes higher than a predetermined target quality.

FIG. 4

**Description**

TECHNICAL FIELD

The present invention relates to an information processing apparatus, method and program for determining an installation position of a radio-wave reflecting member such as a radio-wave reflecting plate which reflects a radio wave in a high frequency band such as a millimeter wave band.

BACKGROUND ART

In recent years, an introduction of a next-generation mobile communication system such as the 5th generation is expected to solve a problem of communication traffic caused by an increase in the number of terminal apparatuses in the mobile communication. In particular, the use of radio waves in high-frequency bands such as quasi-millimeter waves, millimeter waves, and terahertz waves, which are characterized by high speed and large capacity, has been attracting attention. However, since such radio waves in the high-frequency bands have short wavelengths, there are likely to be areas out of line-of-sight (also called "dead area" or "communication impossible area") where a communication is not possible due to a shielding by obstacles such as trees and buildings. Further, in case of using the above-mentioned radio waves in the high frequency bands for a radio power supply, the area out of line-of-sight are likely to occur where the radio power supply is not possible due to the shielding by obstacles such as buildings.

In order to eliminate the foregoing areas where the communication of high-frequency band and the radio power supply cannot be performed, a use of a radio-wave reflecting plate capable of controlling a reflection direction of radio wave (see, for example, Patent Literature 1) is expected.

CITATION LIST

PATENT LITERATURE

Patent Literature 1: Japanese Unexamined Patent Publication No. 2010-226695.

SUMMARY OF INVENTION

TECHNICAL PROBLEM

In case of installing the radio-wave reflecting plate, the necessary number of radio-wave reflecting plate needs to be disposed in appropriate places (for example, wall surfaces of buildings) so that the radio waves reach an area out of line-of-sight against a transmission point such as a base station that transmits the radio waves with a predetermined power. However, there is a problem that it is necessary to conduct an on-site survey to determine the installation position of the radio-wave reflecting plate in the current situation, and a large amount of man-hours and labor costs are required.

SOLUTION TO PROBLEM

An information processing apparatus according to a first aspect of the present invention is an information processing apparatus for performing a process of determining an installation position of a radio-wave reflecting member. This information processing apparatus comprises a propagation-path setting section for setting plural radio-wave propagation paths each with one reflection between a radio-wave transmission point in a target area and a target reception point located in an area out of line-of-sight against the radio-wave transmission point, based on map information of the target area, a reception-characteristics estimating section for estimating reception characteristics at the target reception point for each of the plural radio-wave propagation paths, and an installation-position determining section for calculating a total value of the reception characteristics by selecting the radio-wave propagation paths in descending order of reception characteristics at the target reception point, and for determining an installation position of a radio-wave reflecting member based on a selection result of one or more radio-wave propagation paths selected by a time when the total value becomes higher than a predetermined target quality.

A method according to a first aspect of the present invention is a method for determining an installation position of a radio-wave reflecting member. This method includes setting plural radio-wave propagation paths each with one reflection between a radio-wave transmission point in a target area and a target reception point located in an area out of line-of-sight against the radio-wave transmission point, based on map information of the target area, estimating reception characteristics at the target reception point for each of the plural radio-wave propagation paths, and calculating a total value of the reception characteristics by selecting the radio-wave propagation paths in descending order of reception characteristics at the target reception point, and determining an installation position of a radio-wave reflecting member based on a selection result of one or more radio-wave propagation paths selected by a time when the total value becomes higher than a predetermined target quality.

A program according to a first aspect of the present invention is a program executed by a computer or processor provided in an apparatus for determining an installation position of a radio-wave reflecting member, which includes a program code for setting plural radio-wave propagation paths each with one reflection between a radio-wave transmission point in a target area and a target reception point located in an area out of line-of-sight against the radio-wave transmission point, based on map information of the target area, a program code for estimating reception characteristics at the target reception point for each of the plural radio-wave propagation paths, and a program code for calculating a total value of the reception characteristics by selecting the radio-wave propagation paths in descending order of reception characteristics at the target reception point, and determining an installation position of a radio-wave reflecting member based on a selection result of one or more radio-wave propagation paths selected by a time when the total value becomes higher than a predetermined target quality.

In each of the foregoing information processing apparatus, method and program according to the first aspect, the reception characteristics may be a reception power at the target reception point or a propagation loss from the transmission point to the target reception point.

An information processing apparatus according to a second aspect of the present invention is an information processing apparatus that performs processing for determining an installation position of a radio-wave reflecting member. This information processing apparatus comprises an installation-candidate position searching section for searching for plural installation candidate positions of the radio-wave reflecting member, which are line-of-sight against a radio-wave transmission point in a target area, based on map information of the target area, an installation-candidate position selecting section for selecting one or more installation candidate positions from among the plural installation candidate positions, which have a line-of-sight positional relationship between a target reception point located in an area out of line-of-sight against the radio-wave transmission point and a reflection-light candidate point, and an installation position determining section for determining an installation position of the radio-wave reflecting member based on the selection result of the installation candidate positions.

A method according to a second aspect of the present invention is a method for determining an installation position of a radio-wave reflecting member. This method includes searching for plural installation candidate positions of the radio-wave reflecting member, which are line-of-sight against a radio-wave transmission point in a target area, based on map information of the target area, selecting one or more installation candidate positions from among the plural installation candidate positions, which have a line-of-sight positional relationship between a target reception point located in an area out of line-of-sight against the radio-wave transmission point and a reflection-light candidate point, and determining an installation position of the radio-wave reflecting member based on the selection result of the installation candidate positions.

A program according to a second aspect of the present invention is a program executed by a computer or processor provided in an apparatus for determining an installation position of a radio-wave reflecting member. This program includes a program code for searching for plural installation candidate positions of the plural radio-wave reflecting member, which are line-of-sight against a radio-wave transmission point in a target area, based on map information of the target area, a program code for selecting one or more installation candidate positions from among the plural installation candidate positions, the one or more installation candidate positions, which have a line-of-sight positional relationship between a target reception point located in an area out of line-of-sight against the radio-wave transmission point and a reflection-light candidate point, and a program code for determining an installation position of the radio-wave reflecting member based on the selection result of the installation candidate positions.

In each of the foregoing information processing apparatus, method and program according to the second aspect, the installation-position determining section may narrow down and determine the installation position of the radio-wave reflecting member based on a reflection characteristics parameter of the radio-wave reflecting member, when plural installation candidate positions are selected.

In each of the foregoing information processing apparatus, method and program according to the first aspect and the second aspect, the shape and the number of reflection beams of the radio-wave reflecting member may be determined based on a communication traffic amount by a terminal apparatus located in the area out of line-of-sigh.

ADVANTAGEOUS EFFECTS OF INVENTION

According to the present invention, it is possible to determine an installation position of a radio-wave reflecting member without conducting an expensive field survey, so that radio waves with a predetermined power reach a target reception point located in an area out of line-of-sight area, from a transmission point of radio wave with a high frequency band.

BRIEF DESCRIPTION OF DRAWINGS

[FIG. 1] FIG. 1 is an illustration showing an example of a cellular radio communication system using a radio-wave reflecting plate according to an embodiment.

[FIG. 2] FIG. 2 is a functional block diagram showing an example of a main configuration of an information processing apparatus for determining an installation position of a radio-wave reflecting plate according to an embodiment.

[FIG. 3] FIG. 3 is a flow chart showing an example of a method for determining an installation position of a radio-wave reflecting plate according to an embodiment.

[FIG. 4] FIG. 4 is an illustration showing an example of radio-wave propagation paths with plural reflections in the method of FIG. 3.

[FIG. 5] FIG. 5 is an illustration showing an example of one reflection by a radio-wave reflecting plate.

[FIG. 6] FIG. 6 is a perspective view showing an example of a configuration of a radio-wave reflecting plate according to an embodiment.

[FIG. 7] FIG. 7 is a flow chart showing an example of a method for determining a shape and reflection angle of a reflection beam of a radio-wave reflecting plate according to an embodiment.

[FIG. 8A] FIG. 8A is an illustration of searching for a terminal apparatus in an area out of line-of-sight using a broad-shaped reflection beam of a radio-wave reflecting plate according to an embodiment.

[FIG. 8B] FIG. 8B is a flowchart showing an example of plural reflection beams formed in an area out of line-of-sight by a radio-wave reflecting plate according to an embodiment.

[FIG. 9] FIG. 9 is a functional block diagram showing another example of a main configuration of an information processing apparatus for determining an installation position of a radio-wave reflecting plate according to an embodiment.

[FIG. 10] FIG. 10 is a flow chart showing another example of a method for determining an installation position of a radio-wave reflecting plate according to an embodiment.

[FIG. 11A] FIG. 11A is an illustration showing an example of a search result of installation candidate positions of radio-wave reflecting plates according to an embodiment.

[FIG. 11B] FIG. 11B is an illustration showing an example of a narrow-down selection result of installation candidate positions of radio-wave reflecting plates according to an embodiment.

DESCRIPTION OF EMBODIMENTS

Hereinafter, embodiments of the present invention are described with reference to the drawings.

An information processing apparatus according to the embodiment described herein can determine an installation position of a radio-wave reflecting plate without conducting an expensive field survey, in a cellular-method radio communication system for improving a communication quality of an area out of line-of-sight, by reflecting radio waves with high frequency band (for example, quasi-millimeter wave, millimeter wave, terahertz wave) transmitted from a transmission antenna by one or more radio-wave reflecting plates and reaching them to an area that is out of line-of-sight (hereinafter referred to as "non-line-of-sight area") against the transmission antenna (radio-wave transmission point) of a base station (for example, eNodeB in the LTE or gNodeB in the next generation such as the 5G) in a target area such as an urban area with many obstacles such as buildings.

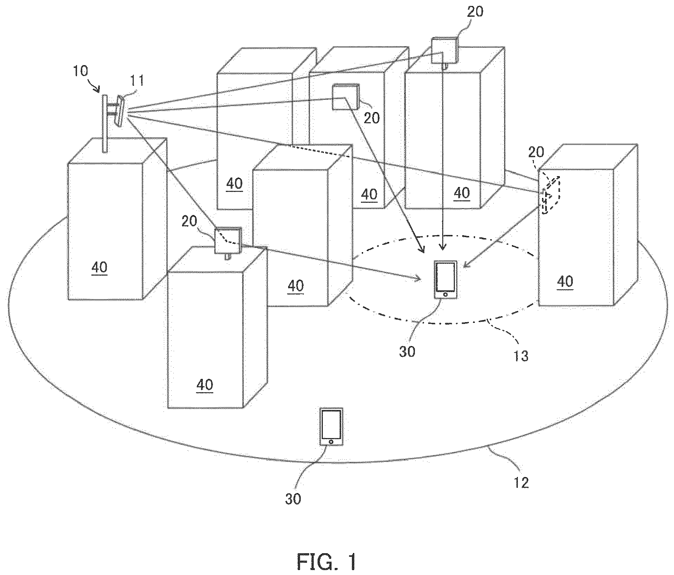

FIG. 1 is an illustration showing an example of the cellular-method radio communication system using the radio-wave reflecting plate according to the embodiment. In FIG. 1, the radio communication system has a base station 10 installed on a roof of a building 40 such as an architecture, and uses a radio wave with a predetermined frequency band from a transmission antenna 11 of the base station 10 to perform a radio communication with a terminal apparatus (also called "user equipment (UE)" or "mobile station") 30 located in a cell 12 on the ground or on the sea. In this radio communication system, an introduction of a mobile communication system of the next-generation such as the 5th generation is expected to solve a problem of communication traffic caused by an increase in the number of terminal apparatuses 30. In particular, the use of high frequency band of quasi-millimeter waves (10 GHz to 30 GHz), millimeter waves (30 GHz to 300 GHz), terahertz waves (300 GHz to 3 THz), or the like, which has features such as high speed and large capacity, is attracting attention.

However, since the radio wave in the high frequency band has a short wavelength, the radio wave is susceptible to blockage by obstacles such as trees and buildings, and there is a concern that a communication cannot be performed. Especially in an urban area, there are many buildings 40 as shown in FIG. 1, the radio wave is easily affected by blockage by the building 40, and a non-line-of sight area out of line-of-sight against the transmission antenna 11 of the base station 10 is generated, so there is a concern that a communication between the base station 10 and the terminal apparatus 30 in the non-line-of-sight area 13 cannot be performed. A similar problem may occur not only in the case of communication, but also in the case of radio power supply to the terminal apparatus 30 from a power transmission antenna using radio waves in the high frequency band.

In the present embodiment, as shown in FIG. 1, in order to improve the communication quality of the high frequency band in the non-line-of-sight area 13, radio-wave reflecting plates 20 as radio-wave reflecting members are installed on wall surfaces or roofs of the buildings 40. It is noted the radio-wave reflecting member may have a shape other than the plate shape.

The radio-wave reflecting plate 20 is a reflecting plate in which the reflection direction of radio waves can be controlled, and its installation position is, for example, a place that is line-of-sight against the transmission antenna (transmission point Tx) 11 of the base station 10 and is a position by which one reflection occurs in the path from the transmission antenna (transmission point Tx) 11 to the target reception point Rx in the non-line-of-sight area 13.

The target reception point Rx may be, for example, a geometric center position of the non-line-of-sight area 13 or a position where the distribution density (predicted density) of the terminal apparatuses 30 in the non-line-of-sight area 13 is high.

As for the installation positions of the radio-wave reflecting plates 20, it is necessary to dispose the necessary number of radio-wave reflecting plates 20 in an appropriate place (for example, wall surface of building) so that the radio waves reach the non-line-of-sight area 13 with a predetermined power. However, if a field survey is conducted to determine the installation positions of the radio-wave reflecting plates, it costs a lot of man-hours and labor costs for the field survey.

In the present embodiment, as described hereinafter, the installation positions of the radio-wave reflecting plates 20 are determined without conducting the expensive field survey.

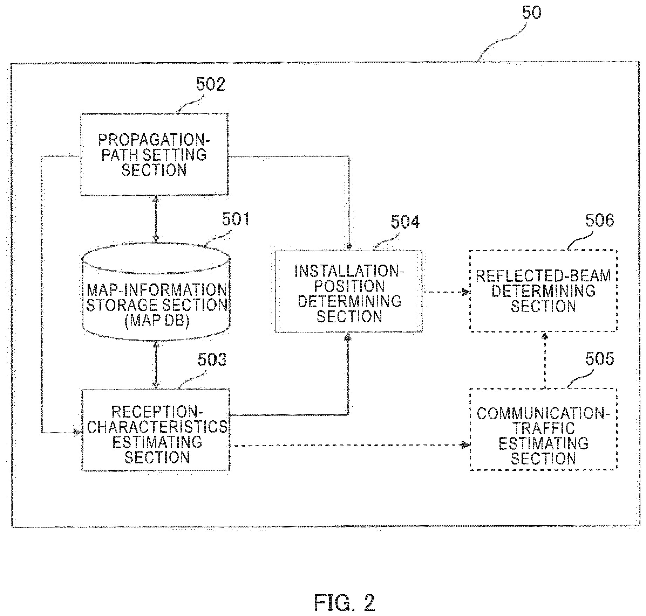

FIG. 2 is a functional block diagram showing an example of a main configuration of an information processing apparatus 50 for determining the installation position of the radio-wave reflecting plate 20 according to the embodiment. The information processing apparatus 50 may be configured with a single server or plural servers connected to a communication network such as the Internet or a mobile communication network, or may be configured with a cloud system configured with plural computers connected to a communication network. The information processing apparatus 50 is configured with, for example, a computer or processor, and can function as the following sections by loading and executing a predetermined program installed in advance or a predetermined program downloaded via a communication network.

In FIG. 2, the information processing apparatus 50 is provided with a map-information storage section (map DB) 501, a propagation-path setting section 502, a reception-characteristics estimating section 503 and an installation-position determining section 504. The map-information storage section 501 stores map information of the target area including information on the three-dimensional coordinates of obstacles such as the building 40 that obstruct radio the wave propagation in the target area such as the cell 12.

Based on the map information of the target area, the propagation-path setting section 502 sets plural radio-wave propagation paths P(1) to P(N) with one reflection between the radio-wave transmission point Tx and the target reception point Rx located in the area out of line-of-sight (non-line-of-sight area) 13 against the transmission antenna 11 of the base station 10 which is the radio-wave transmission point Tx in the target area.

The reception-characteristics estimating section 503 estimates a reception power as reception characteristics at target reception point Rx for each of the plural radio-wave propagation paths P(1) to P(N). The estimated reception characteristics may be a propagation loss from the transmission point Tx of the transmission antenna 11 of the base station 10 to the target reception point Rx.

The installation-position determining section 504 selects the radio-wave propagation paths P(n) in descending order of the reception power at the target reception point, calculates a total value of the reception powers, and determines the installation positions of the radio-wave reflecting plates 20 as one or more radio-wave reflecting members, based on the results of selecting one or more radio-wave propagation paths by a time when the total value exceeds a predetermined target quality (threshold value).

In FIG. 2, the information processing apparatus 50 may be further provided with a communication-traffic estimating section 505 and a reflection-beam determining section 506. The communication-traffic estimating section 505 estimates a communication traffic amount due to the terminal apparatus 30 located in the non-line-of-sight area 13, as exemplified below. The reflection-beam determining section 506 sets a shape of reflection beam and the number of reflection beams of the radio-wave reflecting plate 20 for which the installation position is determined based on the estimation result of the communication traffic amount, as exemplified below.

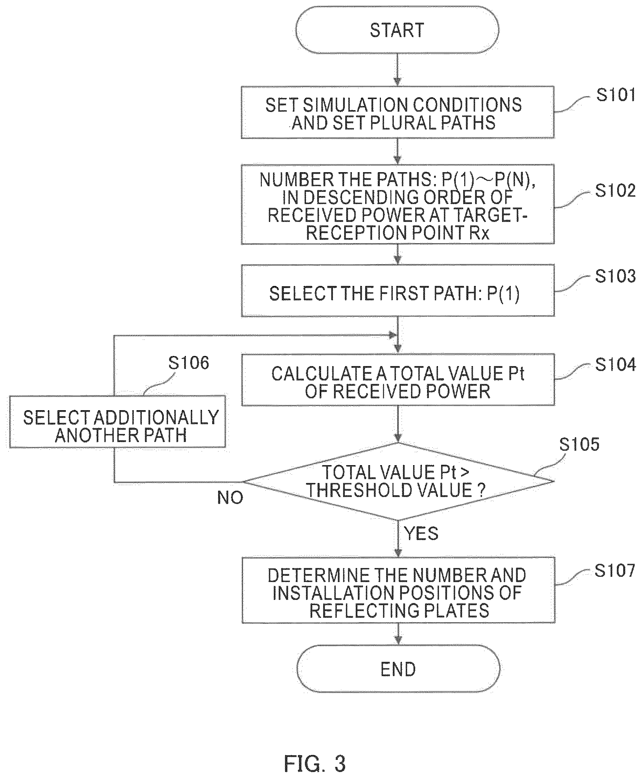

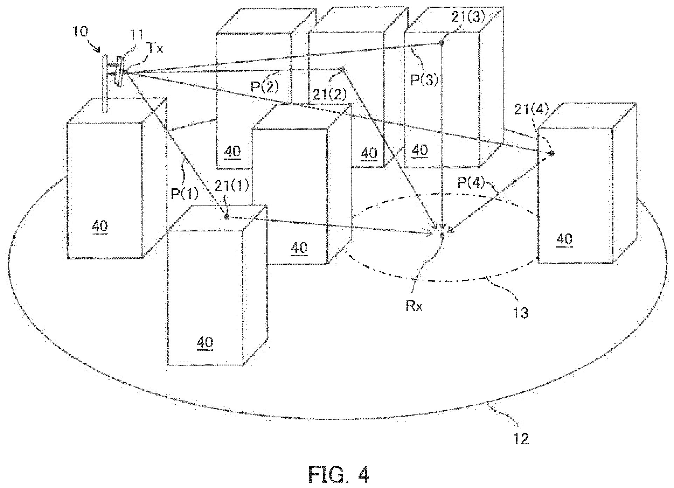

FIG. 3 is a flowchart showing an example of a method for determining the installation positions of the radio-wave reflecting plates 20 according to the embodiment, and FIG. 4 is an illustration showing an example of radio-wave propagation paths P with plural reflections in the method of FIG. 3. The method for determining the installation positions of the radio-wave reflecting plates 20 in FIG. 3 can be implemented, for example, by the information processing apparatus 50 having the configuration in FIG. 2 described above. Each of the reflection points 21(1) to 21(4) on radio-wave propagation paths P(1) to P(4) in the figure is a point that is a line-of-sight against the transmission point Tx (antenna 11 of the base station 10) and the target reception point Rx.

It is noted that, although the reflection points 21(1) to 21(4) are set on the wall surfaces of the buildings 40 in the examples of FIG. 3 and FIG. 4, the reflection points may be set on the roofs of the buildings 40. Furthermore, although the examples in FIG. 3 and FIG. 4 show the case that the number of radio-wave propagation paths P(1) to P(4) with one reflection is four paths, the number of radio-wave propagation paths P may be three paths or less, or may be five paths or more.

In FIG. 3, the information processing apparatus 50 sets simulation conditions such as frequency of radio waves, transmission power, position coordinates of the transmission point Tx, the target reception point Rx, and the reflection characteristics parameters of the radio-wave reflecting plate 20, and sets plural radio-wave propagation paths (hereinafter also referred to as "paths") P(1) to P(N) from the transmission point Tx to the target reception point Rx with one of reflection, based on the map information under the simulation conditions (S101). Herein, N is the set number of the paths.

For path setting, for example, the Ray Trace method based on the geometric optics theory for radio-wave propagation analysis can be used. The Ray Trace method is a method for estimating the propagation characteristics of radio waves by treating radio waves as straight rays and approximately modeling plural propagation paths that exist between transmission and reception points, as rays composed of direct waves, reflected waves, and diffracted waves of radio waves.

Next, the information processing apparatus 50 estimates the reception power when the radio wave transmitted from the transmission point Tx is received at the target reception point Rx via each propagation path, and numbers by ranking the paths P(1) to P(N) in descending order of the estimated values of their reception power. Hereinafter, the paths are referred to as the first path P(1) to the N-th path P(N) in descending order of the estimated values of reception power.

Next, the information processing apparatus 50 selects paths in descending order of the estimated values of reception power at the target reception point Rx and calculates the total value Pt of reception power, and determines whether or not the total value is greater than a predetermined threshold value (target quality) (S103 to S106). For example, the information processing apparatus 50 first selects the first path P(1) (S103), and calculates the total value Pt of the reception power (S104). When the first path P(1) is selected, the total value Pt of the reception power is equal to the reception power received via the first path P(1). Next, the information processing apparatus 50 compares the total value Pt with the threshold value (S105), and if the total value Pt is equal to or less than the threshold value (No in S105), additionally selects the next second pass P(2) (S106), calculates the total value of reception power, and compares the total value with the threshold value (S104, S105). These additional selection of paths, calculation of the total value of reception power and comparison of the total value and the threshold value are repeatedly executed until the total value Pt becomes greater than the threshold value.

When the total value Pt becomes greater than the threshold value (YES in S105), the information processing apparatus 50 determines the installation positions and the number of radio-wave reflecting plates 20 corresponding to the paths selected so far (S107). For example, in the example of FIG. 4, each of the reflection points 21(1) to 21(4) is determined as the installation position of the radio-wave reflecting plate 20, and the number of the radio-wave reflecting plates 20 is determined to be four.

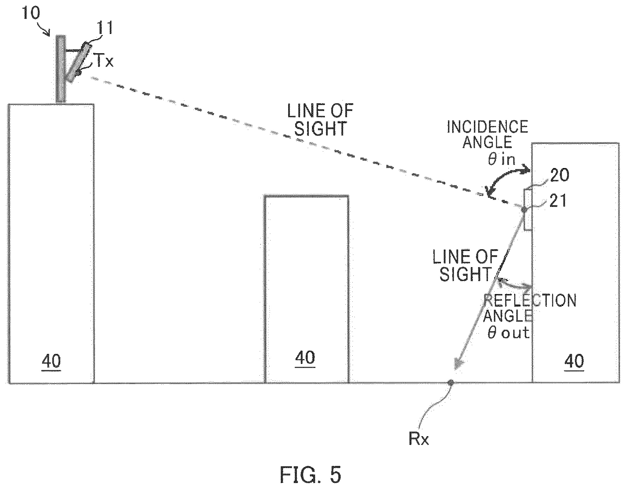

FIG. 5 is an illustration showing an example of one reflection by the radio-wave reflecting plate 20 installed at the reflection point 21 of the line-of-sight path selected in FIG. 3 and FIG. 4. As shown in FIG. 5, in case that the radio-wave reflecting plate 20 is installed along the wall surface of the building 40, reflection of radio waves is not always regular reflection (incidence angle $\theta$in = reflection angle $\theta$out). Therefore, in the present embodiment, the radio-wave reflecting plate 20 is used, in which the direction of the reflection beam can be arbitrarily set.

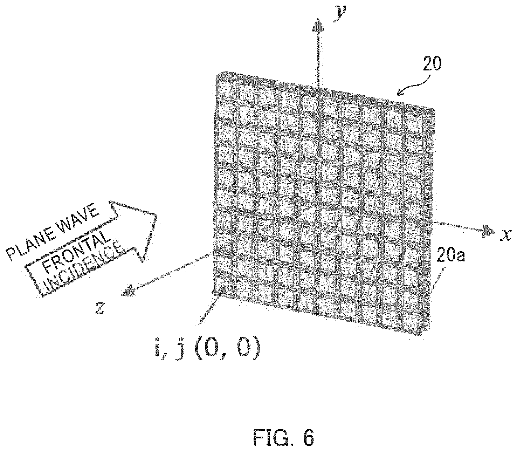

FIG. 6 is a perspective view showing an example of the configuration of the radio-wave reflecting plate 20 according to the embodiment. The radio-wave reflecting plate 20 in FIG. 6 has a configuration in which plural reflecting elements 20a are two-dimensionally disposed in an array. Each of the plural reflecting elements 20a has a surface structure called a meta-surface consisting of three layers, for example, a frequency selective plate (FSS: Frequency Selective Surface), a dielectric layer and a bottom plate, in order from the surface. Herein, by setting the reflection phase difference $\delta_{i,j}$ of the reflected wave with respect to the incident wave for the element 20a of the i-th in x-direction and the j-th in y-direction in the figure based on the following equation (1), a radio wave incident on the radio-wave reflecting plate 20 at an incident angle ($\theta_{in}$, $\varphi_{in}$) can be reflected at an arbitrary reflection angle ($\theta_{out}$, $\varphi_{out}$).

$$\delta_{i,j} = \frac{2\pi}{\lambda} \{pi(\sin\theta_{out}\cos\varphi_{out} - \sin\theta_{in}\cos\varphi_{in})$$
$$+pj(\sin\theta_{out}\sin\varphi_{out} - \sin\theta_{in}\sin\varphi_{in})\}$$
$$\cdots (1)$$

In the equation (1), $\lambda$ is wavelength of the radio wave, each of the $\theta_{in}$ and $\theta_{out}$ is incidence angle and reflection angle on the y-z plane in figure, and each of the $\varphi_{in}$ and $\varphi_{out}$ is incidence angle and reflection angle on the x-z plane in the figure. In the equation (1), each of the pi and pj is the pitch of the reflecting elements 20a in the x-direction and y-direction in the figure.

The shape and reflection angle of the reflection beam of the radio-wave reflecting plate 20 may be determined by, for example, the following method. This method is a method of applying a Directionally Constrained Minimization of Power (DCMP) technique and utilizing a method of forming plural beams by controlling the null direction.

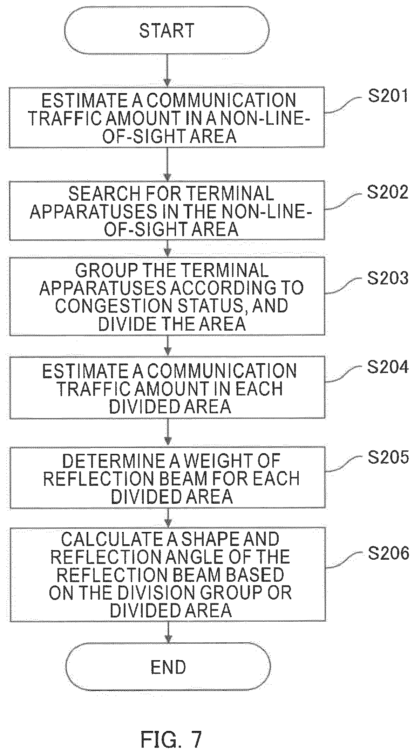

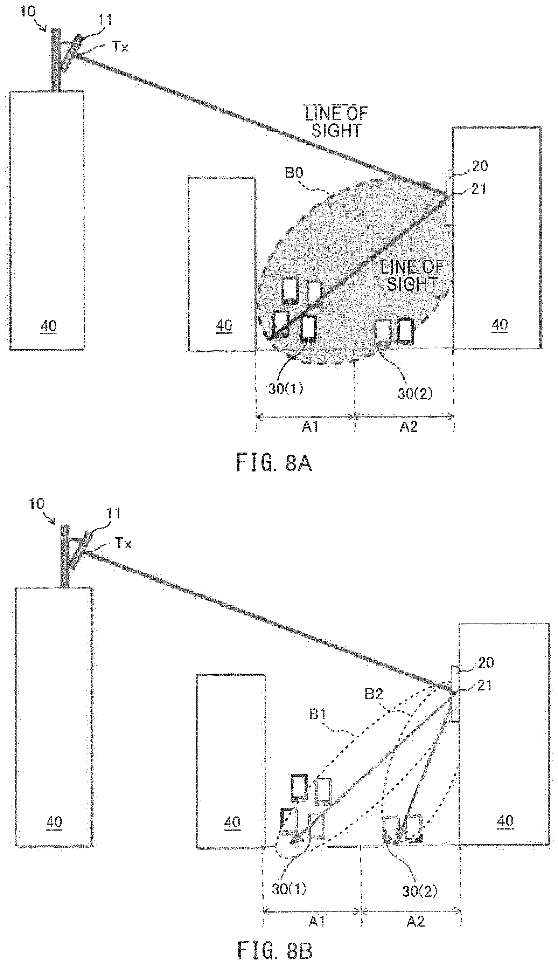

FIG. 7 is a flow chart showing an example of a method for determining the shape and reflection angle of the reflection beam of the radio-wave reflecting plate 20 according to the embodiment. FIG. 8A is an illustration of searching for the terminal apparatus 30 in the non-line-of-sight area 13 using the broad-shaped reflection beam of the radio-wave reflecting plate 20 according to the embodiment, and FIG. 8B is an illustration showing an example of plural reflection beams formed in the non-line-of-sight area 13 by the radio-wave reflecting plate 20 according to the embodiment. The method for determining the shape and reflection angle of the reflection beam of the radio-wave reflecting plate 20 in FIG. 7, FIG. 8A and FIG. 8B can be implemented, for example, by the communication-traffic estimating section 505 and the reflection-beam determining section 506 of the information processing apparatus 50 having the configuration shown in FIG. 2 described above.

In FIG. 7, the information processing apparatus 50 first estimates the traffic amount in the non-line-of-sight area 13 (S201), and then searches for the terminal apparatus 30 (S202). This search can be performed based on the measurement report (MR) reported from the terminal apparatus 30 to the base station 10, for example, in the case of a broad beam having a beam width such that the reflection beam from the radio-wave reflecting plate 20 to the non-line-of-sight area 13 covers the entire non-line-of-sight area 13 (see FIG. 8A).

Next, the information processing apparatus 50 performs a grouping based on the measurement report from the terminal apparatus 30, and divides the non-line-of-sight area 13 into plural divided areas based on the map information (S203). For example, the non-line-of-sight area 13 is divided into two divided areas A1 and A2 as shown in FIG. 8A.

Next, the information processing apparatus 50 estimates the reception power of the terminal apparatus 30 in each divided area, and estimates the communication traffic amount in each divided area (S203, S204). For example, the reception power of the first-group terminal apparatuses 30 located in the divided area A1 shown in FIG. 8A is estimated, and the communication traffic amount in the divided area A1 is estimated based on the estimation result of the reception power. Also, the reception power of the second-group terminal apparatuses 30 located in the divided area A2 is estimated, and the communication traffic amount in the divided area A2 is estimated based on the estimation result of the reception power.

Next, the information processing apparatus 50 determines, for each of the divided areas, a weight of the reflection beam from the radio-wave reflecting plate 20 based on the estimation result of the communication traffic amount (S205). For example, as shown in FIG. 8B, the weight for forming the reflection beam B1 directed from the radio-wave reflecting plate 20 toward the terminal apparatus group in the divided area A1 is determined according to the communication traffic amount in the divided area A1, and the weight for forming the reflection beam B2 directed from the radio-wave reflecting plate 20 toward the terminal apparatus group in the divided area A2 is determined according to the communication traffic amount in the divided area A2.

Next, by controlling the null direction toward the boundary of the divided areas by the method of Directionally Constrained Minimization of Power (DCMP) described above based on the weight of each divided area, the information processing apparatus 50 calculates and determines the shape and the reflection angle of the reflection beam including plural beams directed toward each divided area (S206). For example, as shown in FIG. 8B, by controlling the null direction toward the boundary between the divided areas A1 and A2 based on the weights of the divided areas A1 and A2, the shapes and reflection angles of the reflection beams including the plural beams B1 and B2 respectively directed toward the divided area A1 and A2 are calculated and determined.

As shown in FIG. 7, FIG. 8A and FIG. 8B, by determining the shape and reflection angle of the reflection beam directed from the radio-wave reflecting plate 20 toward the non-line-of-sight area 13 according to the communication traffic amount distributed in the non-line-of-sight area 13, it is possible to prevent a deterioration of communication quality over the entire non-line-of-sight area 13.

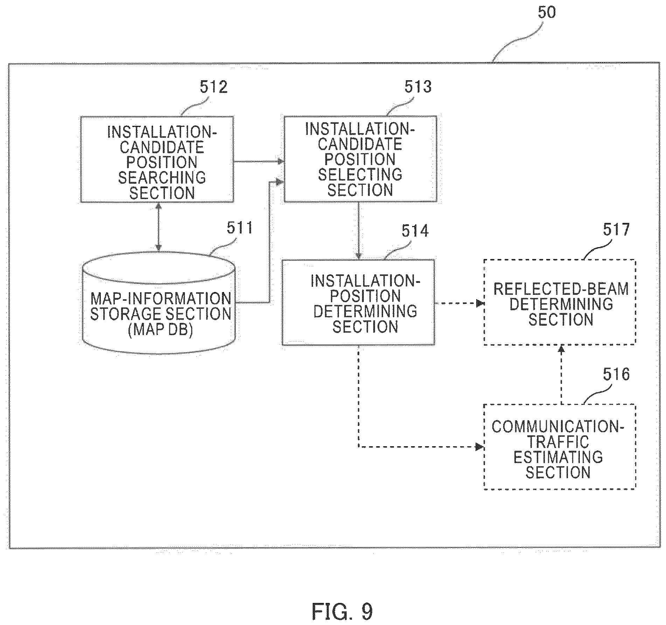

The method for determining the shape and reflection angle of the reflection beam directed from the radio-wave reflecting plate 20 toward the non-line-of-sight area 13 exemplified in FIG. 7, FIG. 8A and FIG. 8B can also be applied to the radio-wave reflecting plates 20 whose installation positions and number are determined by the method shown in FIG. 9 to FIG. 11B below.

FIG. 9 is a functional block diagram showing another example of the main configuration of the information processing apparatus 50 that determines the installation position of the radio-wave reflecting plate 20 according to the embodiment. In FIG. 9, the description of the parts common to the above-described information processing apparatus in FIG. 2 is omitted.

In FIG. 9, the information processing apparatus 50 is provided with a map-information storage section (map DB) 511, an installation-candidate position searching section 512, an installation-candidate position selecting section 513, and an installation-position determining section 514. The map-information storage section 511 stores map information of the target area including information on the three-dimensional coordinates of obstacles such as the buildings 40 that obstruct radio wave propagation in the target area such as the cell 12.

The installation-candidate position searching section 512 searches for installation candidate positions of plural radio-wave reflecting plates 20 that are line-of sight against the radio-wave transmission point Tx in the target area, based on the map information of the target area.

The installation-candidate position selecting section 513 selects one or plural installation candidate positions that have a line-of-sight positional relationship between the target reception point Rx located in the non-line-of-sight area 13 against the radio-wave transmission point Tx and the reflection-light candidate point, from among the plural installation candidate positions searched by the installation-candidate position searching section 512.

The installation-position determining section 514 determines the installation position of the radio-wave reflecting plate 20 based on the selection result of the installation candidate position selected by the installation-candidate position selecting section 513.

In FIG. 9, the information processing apparatus 50 may be further provided with a communication-traffic estimating section 516 and a reflection-beam determining section 517. As exemplified in FIG. 7, FIG. 8A and FIG. 8B described above, the communication-traffic estimating section 516 estimates the communication traffic amount due to the terminal apparatus 30 located in the non-line-of-sight area 13. As exemplified in FIG. 7, FIG. 8A and FIG. 8B described above, the reflection-beam determining section 517 sets the shape and the number of reflection beams of the radio-wave reflecting plate 20 whose installation position is determined based on the estimation result of the communication traffic amount.

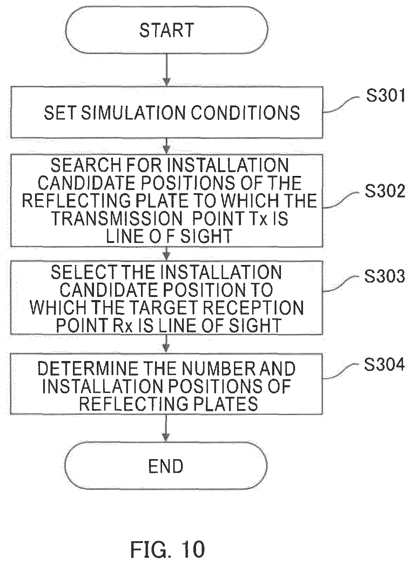

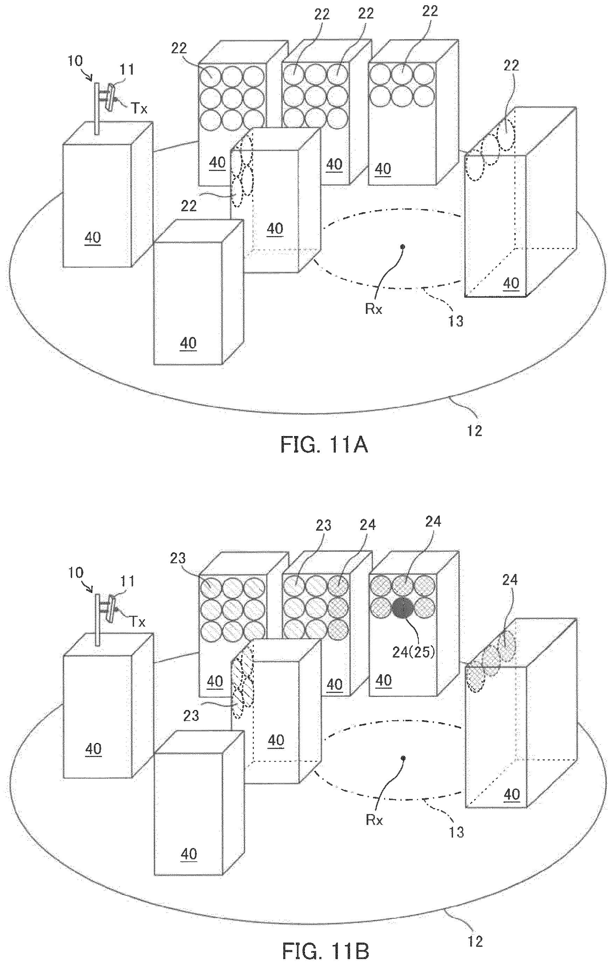

FIG. 10 is a flow chart showing another example of the method for determining the installation position of the radio-wave reflecting plate 20 according to the embodiment. FIG. 11A is an illustration showing an example of search results of the installation candidate positions for the radio-wave reflecting plate 20 in the method of FIG. 10, and FIG. 11B is an illustration showing an example of a narrow selection result of the installation candidate positions of the radio-wave reflecting plate 20 in the method of FIG. 10.

In FIG. 10, the information processing section 50 sets simulation conditions such as frequency of radio waves, transmission power, position coordinates of the transmission point Tx, the target reception point Rx, and reflection characteristics parameters of the radio-wave reflecting plate 20 (S301), and searches for and sets plural installation candidate positions 22 of the radio-wave reflecting plate 20 that are line-of-sight against the transmission point Tx where the transmission antenna 11 of the base station 10 is located, based on the map information under the simulation conditions (S302). For example, as exemplified in FIG. 11A, plural installation candidate positions 22 indicated by white circles in the figure are searched and set on the wall surface of the building 40 that is a line-of-sight against the transmission point Tx.

Next, the information processing apparatus 50 selects one or plural installation candidate positions 24 that are line-of-sight against the target reception point Rx, from among the plural installation candidate positions 22 that are searched and set as described above (S303). For example, as exemplified in FIG. 11B, plural installation candidate positions 24 indicated by cross-hatched circles and black circles in the figure, which are line-of-sight against the target reception point Rx, are selected among from the plural installation candidate positions 22. The plural installation candidate positions 23 indicated by hatched circles in the figure are out of line-of-sight against the target reception point Rx, and are not selected.

Next, the information processing apparatus 50 narrows down and determines the number and the installation positions of the installation candidate positions 25 of the radio-wave reflecting plate 20 from among the plural installation candidate positions 24 that are selected described above, based on the parameters of the radio-wave reflecting plate 20 (for example, incident angle, reflection angle, half-value width of the reflection beam) (S304). For example, as exemplified in FIG. 11B, the installation candidate position 25 indicated by the black circle in the figure, which is one of the plural installation candidate positions 24, is determined as the installation position of the radio-wave reflecting plate 20, and it is determined that the number of radio-wave reflecting plates 20 is one.

As described above, in the present embodiment, it is possible to determine the installation position of the radio-wave reflecting plate 20 without conducting an expensive field survey, so that the radio waves with a predetermined power reach the target reception point Rx located in the non-line-of-sight area 13 from the transmission point Tx (for example, transmission antenna 11 of the base station 10) of radio waves with a high frequency band such as quasi-millimeter waves, millimeter waves, and terahertz waves.

It is noted that, the process steps and configuration elements of the information processing apparatus, radio communication system, and mobile communication system described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, various kinds of radio communication apparatuses, Node B, terminal, hard disk drive apparatus, or optical disk drive apparatus) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means such as processing units or the like used for establishing the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may by executed by a computer or processor.

The medium may be a non-transitory recording medium. Further, the code of the program may be executable by being read by a computer, a processor, or another device or an apparatus machine, and the format is not limited to a specific format. For example, the code of the program may be any of a source code, an object code, and a binary code, and may be a mixture of two or more of those codes.

The description of embodiments disclosed in the present specification is provided so that the present disclosures can be produced or used by those skilled in the art. Various modifications of the present disclosures are readily apparent to those skilled in the art and general principles defined in the present specification can be applied to other variations without departing from the spirit and scope of the present disclosures. Therefore, the present disclosures should not be limited to examples and designs described in the present specification and should be recognized to be in the broadest scope corresponding to principles and novel features disclosed in the present specification.

REFERENCE SIGNS LIST

10: base station
11: transmission antenna
12: cell
13: non-line-of-sight area
20: radio-wave reflecting plate
20a: reflecting element
21: reflecting point
22 to 24: installation candidate position
25: installation position
30: terminal apparatus
40: building
50: information processing apparatus
501: map-information storage section
502: propagation-path setting section
503: reception-characteristics estimating section
504: installation-position determining section
505: communication-traffic estimating section
506: reflection-beam determining section
511: map-information storage section
512: installation-candidate position searching section
513: installation-candidate position selecting section
514: installation-position determining section
516: communication-traffic estimating section

517: reflection-beam determining section

**Claims**

1. An information processing apparatus for performing a process of determining an installation position of a radio-wave reflecting member, comprising:

   a propagation-path setting section for setting plural radio-wave propagation paths each with one reflection between a radio-wave transmission point in a target area and a target reception point located in an area out of line-of-sight against the radio-wave transmission point, based on map information of the target area;
   a reception-characteristics estimating section for estimating reception characteristics at the target reception point for each of the plural radio-wave propagation paths; and
   an installation-position determining section for calculating a total value of the reception characteristics by selecting the radio-wave propagation paths in descending order of reception characteristics at the target reception point, and for determining an installation position of a radio-wave reflecting member based on a selection result of one or more radio-wave propagation paths selected by a time when the total value becomes higher than a predetermined target quality.

2. The information processing apparatus according to claim 1,
   wherein the reception characteristics are a reception power at the target reception point or a propagation loss from the transmission point to the target reception point.

3. An information processing apparatus for performing processing to determine an installation position of a radio-wave reflecting member, comprising:

   an installation-candidate position searching section for searching for plural installation candidate positions of the radio-wave reflecting member, the installation candidate positions being line-of-sight against a radio-wave transmission point in a target area, based on map information of the target area;
   an installation-candidate position selecting section for selecting one or more installation candidate positions from among the plural installation candidate positions, the one or more installation candidate positions having a line-of-sight positional relationship between a target reception point located in an area out of line-of-sight against the radio-wave transmission point and a reflection-light candidate point; and
   an installation position determining section for determining an installation position of the radio-wave reflecting member based on the selection result of the installation candidate positions.

4. The information processing apparatus according to claim 3,
   wherein the installation-position determining section narrows down and determines the installation position of the radio-wave reflecting member based on a reflection characteristics parameter of the radio-wave reflecting member, when plural installation candidate positions are selected.

5. The information processing apparatus according to any one of claims 1 to 4, comprising a reflection-beam determining section for determining a shape and the number of reflection beams of the radio-wave reflecting member based on a communication traffic amount by a terminal apparatus located in the area out of line-of-sight.

6. A method for determining an installation position of a radio-wave reflecting member, comprising:

   setting plural radio-wave propagation paths each with one reflection between a radio-wave transmission point in a target area and a target reception point located in an area out of line-of-sight against the radio-wave transmission point, based on map information of the target area;
   estimating reception characteristics at the target reception point for each of the plural radio-wave propagation paths; and
   calculating a total value of the reception characteristics by selecting the radio-wave propagation paths in descending order of reception characteristics at the target reception point, and determining an installation position of a radio-wave reflecting member based on a selection result of one or more radio-wave propagation paths selected by a time when the total value becomes higher than a predetermined target quality.

7. A method for determining an installation position of a radio-wave reflecting member, comprising:

searching for plural installation candidate positions of the radio-wave reflecting member, the installation candidate positions being line-of-sight against a radio-wave transmission point in a target area, based on map information of the target area;

selecting one or more installation candidate positions from among the plural installation candidate positions, the one or more installation candidate positions having a line-of-sight positional relationship between a target reception point located in an area out of line-of-sight against the radio-wave transmission point and a reflection-light candidate point; and

determining an installation position of the radio-wave reflecting member based on the selection result of the installation candidate positions.

8. A program executed by a computer or processor provided in an apparatus for determining an installation position of a radio-wave reflecting member, comprising:

a program code for setting plural radio-wave propagation paths each with one reflection between a radio-wave transmission point in a target area and a target reception point located in an area out of line-of-sight against the radio-wave transmission point, based on map information of the target area;

a program code for estimating reception characteristics at the target reception point for each of the plural radio-wave propagation paths; and

a program code for calculating a total value of the reception characteristics by selecting the radio-wave propagation paths in descending order of reception characteristics at the target reception point, and determining an installation position of a radio-wave reflecting member based on a selection result of one or more radio-wave propagation paths selected by a time when the total value becomes higher than a predetermined target quality.

9. A program executed by a computer or processor provided in an apparatus for determining an installation position of a radio-wave reflecting member, comprising:

a program code for searching for plural installation candidate positions of the radio-wave reflecting member, the installation candidate positions being line-of-sight against a radio-wave transmission point in a target area, based on map information of the target area;

a program code for selecting one or more installation candidate positions from among the plural installation candidate positions, the one or more installation candidate positions having a line-of-sight positional relationship between a target reception point located in an area out of line-of-sight against the radio-wave transmission point and a reflection-light candidate point; and

a program code for determining an installation position of the radio-wave reflecting member based on the selection result of the installation candidate positions.

FIG. 1

FIG. 2

FIG. 3

FIG. 4

LINE OF
SIGHT

INCIDENCE
ANGLE
$\theta$ in

LINE OF
SIGHT

REFLECTION
ANGLE
$\theta$ out

FIG. 5

FIG. 6

```
                    ┌─────────────┐
                    │    START    │
                    └──────┬──────┘
                           │
                           ▼
        ┌──────────────────────────────────┐
        │      ESTIMATE A COMMUNICATION     │── S201
        │   TRAFFIC AMOUNT IN A NON-LINE-   │
        │           OF-SIGHT AREA           │
        └──────────────────┬───────────────┘
                           │
                           ▼
        ┌──────────────────────────────────┐
        │        SEARCH FOR TERMINAL        │── S202
        │   APPARATUSES IN THE NON-LINE-    │
        │           OF-SIGHT AREA           │
        └──────────────────┬───────────────┘
                           │
                           ▼
        ┌──────────────────────────────────┐
        │        GROUP THE TERMINAL         │── S203
        │    APPARATUSES ACCORDING TO       │
        │      CONGESTION STATUS, AND       │
        │          DIVIDE THE AREA          │
        └──────────────────┬───────────────┘
                           │
                           ▼
        ┌──────────────────────────────────┐
        │      ESTIMATE A COMMUNICATION     │── S204
        │      TRAFFIC AMOUNT IN EACH       │
        │           DIVIDED AREA            │
        └──────────────────┬───────────────┘
                           │
                           ▼
        ┌──────────────────────────────────┐
        │       DETERMINE A WEIGHT OF       │── S205
        │    REFLECTION BEAM FOR EACH       │
        │           DIVIDED AREA            │
        └──────────────────┬───────────────┘
                           │
                           ▼
        ┌──────────────────────────────────┐
        │       CALCULATE A SHAPE AND       │── S206
        │     REFLECTION ANGLE OF THE       │
        │      REFLECTION BEAM BASED        │
        │    ON THE DIVISION GROUP OR       │
        │           DIVIDED AREA            │
        └──────────────────┬───────────────┘
                           │
                           ▼
                    ┌─────────────┐
                    │     END     │
                    └─────────────┘
```

FIG. 7

18

FIG. 8A

FIG. 8B

50

512

INSTALLATION-
CANDIDATE
POSITION
SEARCHING
SECTION

513

INSTALLATION-
CANDIDATE
POSITION
SELECTING
SECTION

511

MAP-INFORMATION
STORAGE SECTION
(MAP DB)

514

INSTALLATION-
POSITION
DETERMINING
SECTION

517

REFLECTED-BEAM
DETERMINING
SECTION

516

COMMUNICATION-
TRAFFIC
ESTIMATING
SECTION

FIG. 9

```
                      ┌─────────────────┐
                      │      START      │
                      └─────────────────┘
                               │
                               ▼
      ┌──────────────────────────────────────────┐
      │       SET SIMULATION CONDITIONS          │  ⟋ S301
      └──────────────────────────────────────────┘
                               │
                               ▼
      ┌──────────────────────────────────────────┐
      │      SEARCH FOR INSTALLATION             │
      │     CANDIDATE POSITIONS OF THE           │
      │  REFLECTING PLATE TO WHICH THE           │  ⟋ S302
      │     TRANSMISSION POINT Tx IS             │
      │            LINE O F SIGHT                │
      └──────────────────────────────────────────┘
                               │
                               ▼
      ┌──────────────────────────────────────────┐
      │      SELECT THE INSTALLATION             │
      │        CANDIDATE POSITION TO             │  ⟋ S303
      │  WHICH THE TARGET RECEPTION              │
      │    POINT Rx IS LINE OF SIGHT             │
      └──────────────────────────────────────────┘
                               │
                               ▼
      ┌──────────────────────────────────────────┐
      │   DETERMINE THE NUMBER AND               │
      │   INSTALLATION POSITIONS OF              │  ⟋ S304
      │       REFLECTING PLATES                  │
      └──────────────────────────────────────────┘
                               │
                               ▼
                      ┌─────────────────┐
                      │       END       │
                      └─────────────────┘
```

FIG. 10

FIG. 11A

FIG. 11B

## INTERNATIONAL SEARCH REPORT

| International application No. |
|---|
| **PCT/JP2022/021134** |

**A. CLASSIFICATION OF SUBJECT MATTER**

*H04W 16/18*(2009.01)i; *H04W 16/28*(2009.01)i
FI: H04W16/18 110; H04W16/28

According to International Patent Classification (IPC) or to both national classification and IPC

**B. FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | 白坂 潤, 屋内環境における反射板を用いた２８ＧＨｚ帯のカバレッジ拡大に関する一検討, 電子情報通信学会２０２１年総合大会講演論文集 通信１, 23 February 2021, p. 364 | 1-2, 6, 8 |
| Y | p. 364<br>p. 364, (SHIRASAKA, J. A Study on Coverage Enhancement for 28 GHz Band in Indoor Environment Using Reflectors.), non-official translation (Lecture proceedings of the 2021 general conference of IEICE: Communication 1) | 5 |
| A | | 3-4, 7, 9 |
| X | 高橋 俊也, 反射体を利用したミリ波屋内通信の接続性改善, 電子情報通信学会２０１０年通信ソサイエティ大会講演論文集１, 31 August 2010, p. 472<br>p. 472, (Connectivity Improvement of Millimeter Wave Indoor Communications Using Reflector), non-official translation (TAKAHASHI, Syunya. Lecture proceedings 1 of the 2010 communication society conference of IEICE.) | 3, 7, 9 |
| Y | KR 10-2018-0047596 A (SK TELECOM. CO., LTD.) 10 May 2018 (2018-05-10)<br>claim 4, paragraphs [0074]-[0075] | 5 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/021134**

| Box No. III | Observations where unity of invention is lacking (Continuation of item 3 of first sheet) |
|---|---|

This International Searching Authority found multiple inventions in this international application, as follows:

Document 1: 白坂 潤, 屋内環境における反射板を用いた２８ＧＨｚ帯のカバレッジ拡大に関する一検討, 電子情報通信学会２０２１年総合大会講演論文集 通信１, 23 February 2021, p. 364, (SHIRASAKA, J. A Study on Coverage Enhancement for 28 GHz Band in Indoor Environment Using Reflectors.), non-official translation (Lecture proceedings of the 2021 general conference of IEICE: Communication 1)

Claims are classified into two inventions below.

(Invention 1) Claims 1-2, 6, 8
Claims 1-2, 6, and 8 have the special technical feature in which an "information processing device sets a plurality of radio wave propagation paths with one time of reflection between a target reception point located in an area beyond a visual line with respect to a transmission point of a radio wave in an target area and the transmission point on the basis of map information of the target area; estimates a reception property in the target reception point for each of the plurality of radio wave propagation paths; calculates a total value of the reception property by selecting the radio wave propagation paths in descending order of the reception property in the target reception point; and determines an installation position of a radio wave reflection member on the basis of a selection result of one or the plurality of radio wave propagation paths selected until the total value becomes higher than a predetermined target quality," and are thus classified as invention 1.

(Invention 2) Claims 3-5, 7, 9
Claims 3-5, 7, and 9 share, with claim 1 classified as invention 1, the common technical feature in which an "installation position of a radio wave reflection member is determined." However, the technical feature does not make a contribution over the prior art in light of the disclosure of document 1 (p. 364) and thus cannot be said to be a special technical feature. There are no other same or corresponding special technical features between Claims 3-5, 7, and 9, and claim 1.
Claims 3-5, 7, and 9 are not dependent on claim 1. Claims 3-5, 7, and 9 are not substantially identical to or similarly closely related to any of the claims classified as invention 1.
Therefore, claims 3-5, 7, and 9 cannot be classified as invention 1.
Claims 3-5, 7, and 9 have the special technical feature in which an "information processing device searches for installation candidate positions of a plurality of the radio wave reflection members as visual lines with respect to transmission points of radio waves in a target area on the basis of map information of the target area; selects one or a plurality of the installation candidate positions, from among a plurality of installation candidate positions, at which a target reception point located in an area beyond the visual line with respect to a transmission point of the radio wave and a reflection light candidate point have a position relationship of the visual line; and determines an installation position for a radio wave reflection member on the basis of a selection result of the installation candidate positions," and are thus classified as invention 2.

Form PCT/ISA/210 (continuation of first sheet) (January 2015)

## INTERNATIONAL SEARCH REPORT

| International application No. |
| --- |
| **PCT/JP2022/021134** |

**Box No. III     Observations where unity of invention is lacking (Continuation of item 3 of first sheet)**

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2022/021134**

| Patent document<br>cited in search report | Publication date<br>(day/month/year) | Patent family member(s) | Publication date<br>(day/month/year) |
|---|---|---|---|
| KR 10-2018-0047596 A | 10 May 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010226695 A